# EUROPEAN PATENT SPECIFICATION

(11) **EP 4 377 429 B1**
(45) Date of publication and mention of the grant of the patent: **25.06.2025**
(21) Application number: 23700237.3
(22) Date of filing: 05.01.2023
(51) Int. Cl.: C11D 1/88, C11D 3/00, C11D 3/28, C11D 3/30, C11D 3/34, C11D 3/36, C11D 3/37, C11D 11/00, C11D 17/00, C11D 17/04, C02F 5/10, C23F 11/10, C02F 1/68, C02F 103/02

(54) **CLEANING PRODUCT FOR A CENTRAL HEATING SYSTEM**
REINIGUNGSMITTEL FÜR EINE ZENTRALHEIZUNG
PRODUIT DE NETTOYAGE POUR UN SYSTÈME DE CHAUFFAGE CENTRAL

(30) Priority: 07.01.2022 GB 202200169
(43) Date of publication of application: 05.06.2024
(73) Proprietor: Adey Holdings (2008) Limited, Gloucestershire GL10 3EZ (GB)
(72) Inventor: JASSAL, Mukash, Gloucestershire GL10 3EZ (GB); DOYLE, Caitlin, Gloucestershire GL10 3E (GB); BEANEY, Josh, Gloucestershire GL10 3EZ (GB)
(74) Representative: Maidment, Marc
(86) International application number: PCT/GB2023/050012
(87) International publication number: WO 2023/131788

(56) References cited:
- WO-A1-2021/152291
- CN-A- 112 226 772
- US-A- 4 810 405
- US-A1- 2018 127 360

## Description

The present invention relates to a cleaning product, particularly for use in a central heating or cooling system, and to methods of manufacturing the cleaning product and cleaning a central heating or cooling system using the cleaning product.

### BACKGROUND TO THE INVENTION

Corrosion, scale and other debris tend to accumulate in radiators and pipework of a central heating system over time. This can impair central heating system performance. Various water-based liquid cleaners containing water-soluble additives are commercially available for dosing into a central heating system to address this issue.

The liquid cleaner is provided in a container such as a bottle or a drum. It can be added into the system via a radiator, using a pressurised can, via a flushing pump, or poured into a filter, for example. In a commercial system, the liquid cleaner may instead be added via a dosing pot installed as part of the central heating system. Once added into the central heating system, the liquid cleaner helps to subsequently flush out the corrosion, scale and other debris that have built up.

Liquid cleaner is usually provided in bottles of 500ml or 1 litre, although larger volumes from 5 litres to 1000 litres may be provided for commercial use. For example, a liquid cleaner sold under the trade mark Adey MC3+ (RTM) Cleaner has a concentrated formula for cleaning a central heating system.

A typical domestic central heating system may have around 100 to 125 litres of system water. Around 300ml of liquid cleaner can be used to clean a 125 litre system, using the Adey MC3+ (RTM) Rapide cleaner for example, which corresponds to a dose of around 0.24% v/v. It would be advantageous to provide a more concentrated liquid cleaner to save on packaging and transport costs, which would be more environmentally-friendly. However, at higher concentrations, ingredients of the liquid cleaner would precipitate or crystallise out of solution due to the solubility limit of the liquid.

It should be noted that concentrated liquid cleaner presents a safety risk, particularly in respect of potential contact with the skin or eyes, and appropriate care must be taken during use. If the liquid is spilled, then it must be disposed of appropriately because its chemical constituents can present an environmental hazard.

It is known to provide a cleaner product in the form of a solid, dissolvable tablet. For example, a solid tablet product is known under the trade mark Flamco (RTM) RedProtect Cleaner RP2, and another solid tablet product is known under the trade mark DosaFil (RTM) for commercial systems. However, whilst the risk of spillage is mitigated compared to liquid cleaners, there can be problems with the speed and extent of dissolution of the solid tablet product. Whilst this goes some way to mitigating the safety and environmental issues of liquid cleaners, the tablets have to be protected by plastic packaging which is not always recyclable or easy to recycle, and skin contact with the tablets is still possible. An example of a known descalant composition also useful for removal of iron oxides and rust deposits in closed systems, including process boilers, heat exchangers, holding tanks, and pipelines is disclosed in US4810405A . CN112226772A discloses an example of a composition for inhibiting corrosion of carbon steel.

It is an object of the invention to reduce or substantially obviate the aforementioned problems.

### STATEMENT OF INVENTION

According to a first aspect of the present invention, there is provided a cleaning product in the form of a cream or gel for use in a central heating or cooling system, the cleaning product comprising: at least 20% complexing agent (or agents), at least 5% dispersing agent (or agents), at least 5% amphoteric surfactant (or surfactants), and less than 20% water. The cleaning product may be encapsulated in a water-soluble film or provided in a container.

This provides a cleaning product which is more highly concentrated than a conventional liquid cleaner for a central heating system. There is a corresponding benefit in terms of reduced packaging and reduced weight for a particular amount of product required to clean a central heating or cooling system. This also minimises the carbon footprint of the product in terms of the energy costs to transport it, and the space required for transporting and storing it.

There may be at least 10% water in the product. That is, there may be in the region of 10% to 20% water in the product. Preferably, there may be up to about 15% water in the product. Some of the ingredients may be dissolved in water or have water content (i.e. provided as aqueous or hydrated starting materials) which can contribute to the water content of the prepared formulation.

By providing a concentrated formulation with less than 20% water, a water-soluble film can remain intact around the cleaning product without dissolving. This makes it easier and significantly safer to handle the product, mitigating the risk of spillage and contact with a person's skin or eyes, for example. Where encapsulated in the film, a number of cream/gel capsules or pods may be provided together in a cardboard box, for example.

In commercial applications for larger system sizes, where significant volumes of product may be required, the more concentrated cleaning product also has correspondingly scaled benefits in terms of transporting, dosing, and handling the product.

In use, the product can be added into a central heating or cooling system via a filter or dosing pot, for example, typically by opening a lid of the filter or dosing pot. If packaged in a water-soluble film, the film will be dissolved by the system water over a period of minutes and release the cleaning product into the system water. Once introduced into the system water, the product quickly disperses compared to a solid tablet-based product, providing immediate protection for the central heating/cooling system without the risk of forming clumps of material which may clog the system.

The ingredients may be provided in the form of a cream or gel (or more generally an emulsion). The cream or gel may be substantially homogenous.

Note that the terms "cream" and "gel" are used roughly synonymously. The product is an emulsion which is low in water content so that it does not dissolve the water-soluble film from the inside. The exact characteristics will depend on the ingredients used, which may vary in different embodiments.

The percentage amounts of the ingredients may be % weight amounts.

A cleaning product in the form of a cream or gel is easier to handle than a liquid cleaner, and readily dissolves and/or disperses into the system water. The concentration of the ingredients in the cream or gel is also higher than possible for a conventional water-based liquid cleaner for a central heating system.

The dosing ratio of the cleaning product of the present invention relative to the capacity of the central heating system may be about 0.2% v/v or less, preferably <0.16% v/v, for example. A total cleaning product volume may therefore be about 250ml or less, such as 200ml or less for example.

At least one of the ingredients may be suspended in the cream or gel. For example, the complexing agent may be suspended in the cream/gel, or the dispersing agent may be suspended, or the amphoteric agent may be suspended, or combinations thereof. That is not to say that the entirety of a particular ingredient is suspended, but at least some of it may be depending on the amount of water present and the relative solubility of each ingredient.

The suspended ingredient(s) may be dispersed substantially evenly through the cream or gel. The cream or gel may be thick enough to (or have a viscosity suitable to) keep the suspended ingredient(s) in suspension for the shelf life of the cleaning product. Even if there is settling of the suspended ingredients over enough time, the ingredients are still readily dispersed when the cleaning product is introduced into the system water.

The shelf life of the product may be at least 1 year, or at least 2 years, or preferably at least 3 years. More preferably the shelf life of the product may be between 3 to 5 years. The shelf life may depend on the stability of the product and, where provided in a water-soluble film, the interactions of the product with the film.

Whilst the product is thicker than a conventional liquid cleaner, the viscosity of the cleaning product should not be excessively high. In particular, the flow characteristics of the cleaning product should be suitable for use in a chemical dosing device or system, such as the automated dosing means disclosed in GB2597080.

The water-soluble film may be a polymer film such as a poly(vinyl alcohol) film.

The high concentration of cleaning ingredients and corresponding low water content of the cream/gel means that the film is not dissolved by the cleaning product prior to addition to the system water. Prior art liquid cleaners have contained too much water for this to be possible.

The cleaning product may comprise at least about 40%, 50% or 60% complexing agent, preferably at least about 65% or 70% complexing agent, and more preferably about 75% or 80% complexing agent. In some embodiments, the percentage amount of complexing agent may be up to about 85%. For higher levels of complexing agent in the product, such as around 70% or 80%, the amount of water in the product is preferably around 10% to 15%.

The complexing agent may be provided in solution, such as aqueous solution.

The complexing agent may include one or more organophosphorus compounds. For example, a phosphonate such as sodium phosphonate may be provided. Note that other phosphonates, such as potassium phosphonate, may be provided.

The organophosphorus compound(s) can assist with the breakdown and/or dissolution of metal compounds typically found in heating system debris, such as magnetite and other iron compounds.

The cleaning product may comprise up to about 15% dispersing agent.

The dispersing agent may include one or more organosulfur compounds. For example, a sulfonic acid such as a polymeric sulfonic acid may be provided.

The organosulfur compound(s) can aid dispersal of debris in the central heating or cooling system, in order for debris to be flushed from the system. The debris may be magnetic or non-magnetic.

The cleaning product may comprise up to about 15% amphoteric surfactant.

The amphoteric surfactant may be a low-foaming amphoteric surfactant. That is, an amphoteric surfactant which, when circulated in central heating system water as part of the cleaning product, does not generate significant amounts of foam.

The amphoteric surfactant may include one or more amino acids. For example, an alpha amino acid such as alanine may be provided. Similar amino acids such as glycine are also contemplated for use in the cleaning product.

The cleaning product may comprise corrosion inhibitor. The cleaning product may comprise at least about 2% corrosion inhibitor. The cleaning product may comprise up to about 10% corrosion inhibitor.

The corrosion inhibitor substantially mitigates corrosion of the system by the cleaning product or other corrosion-causing moieties in the system water. Providing the corrosion inhibitor in the cleaning product allows the product to remain in the system for up to 28 days.

The corrosion inhibitor may include one or both of an amine and an azole. The amine may include triethanolamine. The azole may include benzotriazole.

The cleaning product can therefore have a secondary function of minimising corrosion of the pipework and other internal portions of the central heating/cooling system.

In one embodiment, the cleaning product may be a cream/gel which contains 30-80% of organophosphorus compound as a complexing agent, around 5-15% organosulfur compound as a dispersing agent, around 5-15% amphoteric surfactant, around 10-15% water, and 2-10% corrosion inhibitor. This provides a highly concentrated cream or gel cleaning product.

In some embodiments, the cleaning formulation may consist essentially only of complexing agent(s), dispersant(s), surfactant(s), optionally corrosion inhibitor(s), and water.

The cleaning product may include a second solvent, in addition to water. The second solvent may be an organic solvent.

The cleaning product may include a glycol, such as ethylene glycol, diethylene glycol or propylene glycol. This can be suitable for aiding dissolution of some ingredients when preparing the cream / gel. It will be appreciated that another diol, triol or suitable compound comprising multiple hydroxyl groups may be provided alternatively or in addition.

A first group of the ingredients may be provided in a first compartment of the water-soluble film or container. A second group of the ingredients may be provided in a second compartment of the water-soluble film or container. Each group of ingredients may individually comprise less than 20% water.

This may be suitable where a particular combination of ingredients does not form a stable cream/gel with the amount of water used. The ingredients can still separately dissolve or form a cream/gel or other emulsion in less than 20% water, and whilst packaged separately they can still be added to the central heating/cooling system at the same time.

The cleaning product may be used in a central heating system or central cooling system. The cleaning product may be used in other circulation systems where there is metal pipework or conduits, particularly where the pipework/conduits convey water. According to a second aspect of the invention, there is provided a method of manufacturing a cleaning product for a central heating or cooling system, the method comprising the steps of mixing ingredients including a complexing agent, a dispersing agent, and an amphoteric surfactant into a quantity of water, forming a cream or gel comprising at least 20% complexing agent, at least 5% dispersing agent, at least 5% amphoteric surfactant, and less than 20% water.

The advantages are substantially similar to those presented for the first aspect of the invention. Any feature or features presented with respect to the first aspect of the invention may be provided in the method.

The method may further comprise the step of encapsulating the cream or gel in a water-soluble film.

As the cream / gel forms, at least one of the ingredients may be suspended or become suspended in the cream or gel. One or more of the ingredients may be powdered, and may be suspended in the cream or gel.

The ingredients may be mixed together as a single phase solution. The solution may be thickened e.g. by adding a viscosity modifier (or thickening agent) or by evaporating water, to thicken the solution. Any suitable thickening agent may be used, if suitably compatible with the other ingredients. It will be appreciated that the solution may be thickened by other means and it is not essential to add a viscosity modifier. Once thickened, the cream or gel may form.

A first group of the ingredients may be mixed into a first quantity of the water to form a first cleaning product component. A second group of the ingredients may be mixed into a second quantity of the water to form a second cleaning product component.

The first and second cleaning product components may be encapsulated in a water-soluble film in respective first and second compartments of that film, or in separate (or discrete) water-soluble films.

For example, a kit of parts for a cleaning product may include one or more first capsules / units of water-soluble film containing the first cleaning product component, and one or more second capsules / units of water-soluble film containing the second cleaning product component. Each capsule or pod may then be added to the system water. According to a third aspect of the invention, there is provided a kit of cleaning product for use in a central heating or cooling system, the kit comprising a first cleaning product component in a first container (such as water-soluble film) and a second cleaning product component in a second container (such as water-soluble film), in which the first and second cleaning product components together comprise at least 20% complexing agent, at least 5% dispersing agent, at least 5% amphoteric surfactant, and optionally corrosion inhibitor, and in which the first and second cleaning product components each independently comprise less than 20% water.

The kit may include any feature or features presented with respect to other aspects of the invention. The cleaning product components may each include any subset of the ingredients, such that together they provide the required combination of cleaning product ingredients.

According to a fourth aspect of the invention, there is provided a method of cleaning a central heating or cooling system, the method comprising introducing a cleaning product of the first aspect of the invention, or made by the method of the second aspect of the invention, into fluid of the central heating or cooling system.

After a period of time has elapsed for the cleaning product to circulate and take effect, the cleaning product may be flushed out of the central heating or cooling system. This is typically followed by filling the central heating system with a new quantity of water which does not contain the cleaning product.

### BRIEF DESCRIPTION OF THE DRAWINGS

For a better understanding of the present invention, and to show more clearly how it may be carried into effect, reference will now be made by way of example only to the accompanying drawings, in which:
Figure 1 is a flow chart illustrating methods according to the second aspect of the invention; and
Figure 2 shows a cleaning product according to the first or third aspect of the invention being used to protect a central heating system according to the method of the fourth aspect of the invention.

### DESCRIPTION OF PREFERRED EMBODIMENTS

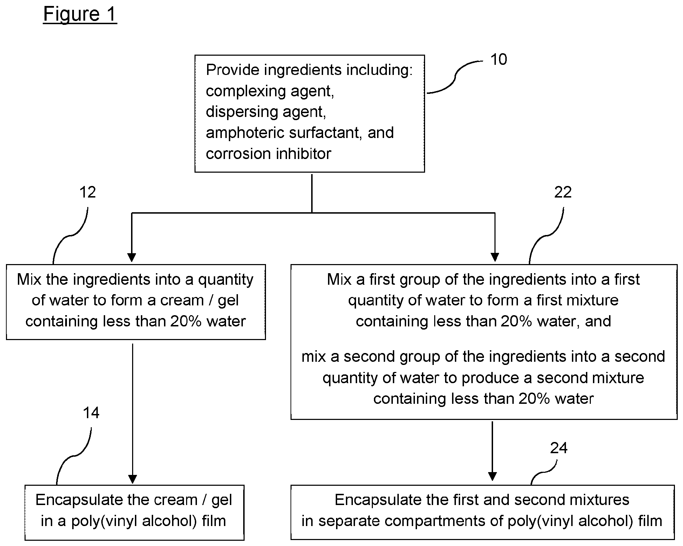

Figure 1 shows two different ways of making a cleaning product for use in cleaning a central heating system or central cooling system.

In the first way of making formulation for the cleaning product, the first step 10 is to provide ingredients including the complexing agent, dispersing agent, amphoteric surfactant, and optionally corrosion inhibitor. These ingredients can be mixed together in a quantity of water to provide a cleaning formulation in a second step 12, and encapsulated in water-soluble film such as poly(vinyl alcohol) film in a third step 14. The complexing agent may include sodium phosphonate, for example, although other phosphonates and organophosphorus compounds may be suitable as complexing agents for metal ions and/or compounds in a central heating/cooling system. The complexing agent may be a powder, such as anhydrous powder. The relative amount of complexing agent may be about 20% to 40% of the final cleaning product. For example, for 100g of cream/gel, the amount of complexing agent may be 20g to 40g. However, in some embodiments, up to about 80% or 85% complexing agent may be provided.

The dispersing agent may include polymeric sulfonic acid, for example, although other sulfonic acids and organosulfur compounds may be suitable as dispersing agents for breaking down or dissolving debris such as metal compounds or ions in a central heating/cooling system. The dispersing agent may be a solid or powder, such as an anhydrous solid or powder. The relative amount of dispersing agent should be about 5% to 15% of the final cleaning product. For 100g of cream/gel, the amount of complexing agent would be 5g to 15g.

The amphoteric surfactant may include alanine, for example, although other amino acids or low-foaming amphoteric surfactants may be suitable for use in the cleaning product. The surfactant may be a powder, such as anhydrous powder. The relative amount of amphoteric surfactant should be about 5% to 15% of the final cleaning product. For 100g of cream/gel, the amount of amphoteric surfactant would be 5g to 15g.

The corrosion inhibitor may include benzotriazole and triethanolamine, for example, although other suitable corrosion inhibitors may be provided instead of or in addition to those compounds. The relative amount of corrosion inhibitor compounds should total about 2% to 10% of the final cleaning product.

For preparing 100g of cream/gel, the mixing step 12 involves mixing the ingredients into less than 20g of water when using the amounts of ingredients noted above. For example, the amount of water may be 10g to 15g. The water may be heated (whilst remaining liquid) to maximise the extent to which it can dissolve the ingredients, for example at around 50°C. The mixing may involve stirring in a reaction vessel.

In some embodiments the ingredients may be mixed in sequentially, or altogether at the same time in other embodiments. It may sometimes be preferable to dissolve the minor ingredients into the water first. For example, the corrosion inhibitor, the amphoteric surfactant and/or the dispersing agent may be mixed into the water first, followed by the complexing agent. Mixing in the major ingredient, i.e. the complexing agent, may then form the cream/gel product with some ingredient being suspended in the cream/gel that forms. Ingredient that becomes suspended may include precipitate from solution and/or ingredient which was not previously dissolved in the water.

In some embodiments, the order in which ingredients are added may be dependent on the solubility of a given ingredient in the cream / gel. That is, one ingredient which does not tend to dissolve into the cream / gel as well as the other ingredients may be added last. For example, a liquid mixture may be prepared comprising all but one of the ingredients. Once done, the last ingredient (which may be in the form of a powder) may be added. This may thicken the mixture and suspend the powder homogenously in the cream / gel to give a single cleaning product formulation.

Where the mixture has been heated, it may be cooled or allowed to cool. The cream/gel formed following the mixing step can be encapsulated in water-soluble film in step 14, such as poly(vinyl alcohol) film, which is so far unknown for a central heating system cleaner. The relatively low water content of the cream/gel means that the cleaning product 130 can be provided in a single compartment of the film, without dissolving the cream/gel dissolving the film. The cream/gel is stable for storage at room temperature in the water-soluble film over an extended period of time.

The cream/gel has a significantly higher relative concentration of cleaning chemicals, and a significantly lower relative concentration of water, compared to prior art cleaning formulations for a central heating system.

The cream or gel may be concentrated enough that a suitable dose for a typical domestic central heating system is about 200ml, for example. The volume of cream/gel in a given capsule or pod of the product may be less than this, in which case multiple capsules / pods can be used for treating the system. The number of capsules required can be scaled according to the size of the central heating system, and optionally the amount of time since it was previously cleaned.

In the second way of making formulation for the cleaning product, the ingredients are again provided in the first step 10. However, they are then divided into two groups of ingredients. The groups are mixed 22 into separate quantities of water to prepare first and second cleaning product compositions, which are encapsulated 24 in separate compartments of water-soluble film. Either or both of the first and second compositions may be a cream or gel. The separate compartments may be part of completely different capsules / films, or may be discrete compartments within different parts of the same capsule / film.

For example, a first group of the ingredients may include the amphoteric surfactant, the corrosion inhibitor(s) and the dispersing agent, whilst the second group of ingredients may include the complexing agent. In another example, the first group of the ingredients may include the amphoteric surfactant, the corrosion inhibitor(s), the dispersing agent and some of the complexing agent, whilst the second group may include the remainder of the complexing agent. It will be appreciated that the groups may each be selected to independently include any combination of the ingredients.

The amount of water used for mixing with each group of ingredients should be less than 20% of the total weight / volume of that group, to mitigate dissolution of the film by the cleaning product composition.

Whilst providing the cleaning product in a single compartment may be a comparatively more economical route to providing the cleaning product, mixing two groups of the ingredients into respective first and second quantities of water can be useful where the ingredients are somewhat incompatible for forming a cream or gel when mixed together.

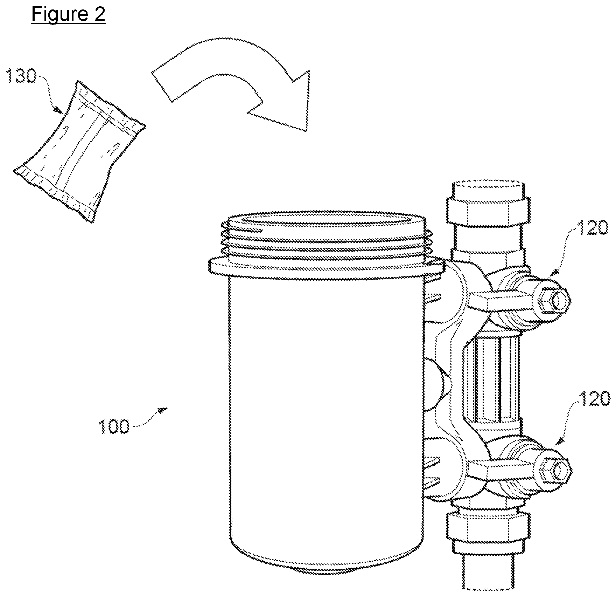

Figure 2 shows a cleaning product 130 where the ingredients are provided in a water-soluble film. In some embodiments, two products 130 may be provided as a kit, together containing the ingredients of the cleaning product. A filter 100 is connected to a central heating system (not shown) by means of inlet and outlet valves 120.

In order to clean the central heating system, the filter 100 has first been isolated from the system by shutting valves 120. The filter lid (not shown) has also been removed. The cleaning product 130 is then added into the filter 100 via the open end. The lid can then be secured to the filter 100 and the valves 120 opened. It will be appreciated that the number of products 130 added to the filter may vary according to the amount of product required to dose the particular size of system being cleaned. The number of products 130 used is normally less than the internal volume of the filter, leaving room for a magnet attached to the lid to fit into the filter when the lid is secured to it.

The film of the cleaning product 130 dissolves in the central heating system water over a short time, typically on the order of minutes. This releases the cleaning product cream/gel, which dissolves or disperses into the system water. Where the cream/gel includes a suspended ingredient or ingredients, those ingredients can also dissolve or disperse into the system water. The ingredients provide a cleaning action by dislodging debris and unwanted contaminants (particularly metals and their compounds) within the central heating system pipework and radiators.

The ingredients are circulated within the central heating system for a period of time to allow the cleaning action to occur. This may take a minimum of around an hour, for example, although the amount of time required will to some extent depend on the size of the system and how long it has been since it was last cleaned (i.e. how dirty / clogged the system is). In some cases, the cleaning product may be left in for a period of days or a few weeks (up to 28 days), for example. Corrosion inhibitor should be provided to mitigate corrosion to the central heating / cooling system during that time.

Once the cleaning product has been circulated for long enough, the system can be drained and flushed through with fresh water. The system is then re-filled as usual. This may include dosing the re-filled system water with a suitable amount of corrosion inhibitor.

The embodiments described above are provided by way of example only, and various changes and modifications will be apparent to persons skilled in the art without departing from the scope of the present invention as defined by the appended claims.

## Claims

1. A cleaning product for use in a central heating or cooling system, the cleaning product comprising
at least 20 wt.% complexing agent,
at least 5 wt.% dispersing agent,
at least 5 wt.% amphoteric surfactant, and
less than 20 wt.% water,
in which the cleaning product is in the form of a cream or gel.

2. A cleaning product as claimed in claim 1, comprising corrosion inhibitor, optionally in which the corrosion inhibitor includes any one or more of: an amine, an azole, triethanolamine and/or benzotriazole.

3. A cleaning product as claimed in claim 1 or claim 2, in which the cream or gel is encapsulated in a water-soluble film or provided in a container, optionally in which a first group of the cleaning product ingredients is provided in a first compartment of the water-soluble film or container, and a second group of the cleaning product ingredients is provided in a second compartment of the water-soluble film or container, and each group of ingredients comprises less than 20 wt.% water.

4. A cleaning product as claimed in any preceding claim, in which at least one of the complexing agent, dispersing agent and amphoteric surfactant is suspended in the cream or gel.

5. A cleaning product as claimed in any preceding claim, comprising one, two, three or all four of the following:
60 wt.% to 85 wt.% complexing agent;
up to 15 wt.% dispersing agent;
up to 15 wt.% amphoteric surfactant; and
when dependent on claim 2, up to 10 wt.% corrosion inhibitor;
in which the sum of wt.% amounts for the complexing agent, the dispersing agent, the amphoteric surfactant and the water, and where applicable the corrosion inhibitor, do not exceed 100%.

6. A cleaning product as claimed in any preceding claim, in which the complexing agent includes one or more organophosphorus compounds, optionally in which the one or more organophosphorus compounds include a phosphonate or sodium phosphonate.

7. A cleaning product as claimed in any preceding claim, in which the dispersing agent includes one or more organosulfur compounds, optionally in which the one or more organosulfur compounds include a sulfonic acid or a polymeric sulfonic acid.

8. A cleaning product as claimed in any preceding claim, in which the amphoteric surfactant is a low-foaming amphoteric surfactant and/or the amphoteric surfactant includes one or more amino acids, optionally in which the one or more amino acids include an alpha amino acid or alanine.

9. A cleaning product as claimed in any preceding claim, in which the cream or gel comprises at least 40 wt.% complexing agent, 5 wt.% to 15 wt.% dispersing agent, 5 wt.% to 15 wt.% amphoteric surfactant, less than 20 wt.% water, and 2 wt.% to 10 wt.% corrosion inhibitor.

10. A cleaning product kit for use in a central heating or cooling system, the kit comprising a first cleaning product component in a first container and a second cleaning product component in a second container, in which the first and second cleaning product components together comprise at least 20 wt.% complexing agent, at least 5 wt.% dispersing agent, and at least 5% amphoteric surfactant, in which the first and second cleaning product components each independently comprise less than 20 wt.% water.

11. A cleaning product kit as claimed in claim 10, in which one or both of the first and second cleaning product components comprise corrosion inhibitor.

12. A method of manufacturing a cream or gel which is a cleaning product for a central heating or cooling system, the method comprising the steps of mixing ingredients including a complexing agent, a dispersing agent, an amphoteric surfactant and a quantity of water, and from the mixture forming a cream or gel comprising at least 20 wt.% complexing agent, at least 5 wt.% dispersing agent, at least 5 wt.% amphoteric surfactant, and less than 20 wt.% water.

13. A method as claimed in claim 12, further comprising the step of encapsulating the cream or gel in a water-soluble film, optionally in which
a first group of the cleaning product ingredients are mixed into a first quantity of the water to form a first cleaning product component, and
a second group of the cleaning product ingredients are mixed into a second quantity of the water to form a second cleaning product component, and
the first and second cleaning product components are encapsulated in the water-soluble film in respective first and second compartments.

14. A method as claimed in claim 12 or claim 13, including mixing corrosion inhibitor into the mixture, in which the cream or gel comprises at least 40 wt.% complexing agent, 5 wt.% to 15 wt.% dispersing agent, 5 wt.% to 15 wt.% amphoteric surfactant, less than 20 wt.% water, and 2 wt.% to 10 wt.% corrosion inhibitor.

15. A method of cleaning a central heating or cooling system, the method comprising introducing a cleaning product as claimed in any of claims 1 to 9 or a kit as claimed in claim 10 or claim 11 into fluid of the central heating or cooling system, optionally in which, after a period of time has elapsed for the cleaning product or kit to circulate and take effect, the cleaning product or kit is flushed out of the central heating or cooling system.

## Patentansprüche

1. Reinigungsprodukt zur Verwendung in einem zentralen Heiz- oder Kühlsystem, das Reinigungsprodukt umfassend mindestens 20 Gew.-% Komplexbildner,
mindestens 5 Gew.-% Dispergiermittel,
mindestens 5 Gew.-% amphoteres Tensid, und
weniger als 20 Gew.-% Wasser,
wobei das Reinigungsprodukt in Form einer Creme oder eines Gels vorliegt.

2. Reinigungsprodukt nach Anspruch 1, umfassend einen Korrosionsinhibitor, wobei der Korrosionsinhibitor optional einen oder mehrere der folgenden Bestandteile einschließt: ein Amin, ein Azol, Triethanolamin und/oder Benzotriazol.

3. Reinigungsprodukt nach Anspruch 1 oder Anspruch 2, wobei die Creme oder das Gel in einem wasserlöslichen Film eingekapselt oder in einem Behälter bereitgestellt ist, optional wobei eine erste Gruppe der Reinigungsproduktbestandteile in einem ersten Kompartiment des wasserlöslichen Films oder Behälters bereitgestellt ist und eine zweite Gruppe der Reinigungsproduktbestandteile in einem zweiten Kompartiment des wasserlöslichen Films oder Behälters bereitgestellt ist, und jede Gruppe von Bestandteilen weniger als 20 Gew.-% Wasser umfasst.

4. Reinigungsprodukt nach einem der vorhergehenden Ansprüche, wobei mindestens eines der Komplexbildner, Dispergiermittel und amphoteren Tenside in der Creme oder dem Gel suspendiert ist.

5. Reinigungsprodukt nach einem der vorhergehenden Ansprüche, umfassend einen, zwei, drei oder alle vier der folgenden:
60 Gew.% bis 85 Gew.% Komplexbildner;
bis zu 15 Gew.-% Dispergiermittel;
bis zu 15 Gew.-% amphoteres Tensid; und
wenn er von Anspruch 2 abhängig, bis zu 10 Gew.-% Korrosionsinhibitor;
wobei die Summe aus Gew.-% für den Komplexbildner, das Dispergiermittel, das amphotere Tensid und das Wasser und gegebenenfalls den Korrosionsinhibitor 100 % nicht überschreitet.

6. Reinigungsprodukt nach einem der vorhergehenden Ansprüche, wobei der Komplexbildner eine oder mehrere Organophosphorverbindungen einschließt, wobei die eine oder mehrere Organophosphorverbindungen gegebenenfalls ein Phosphonat oder Natriumphosphonat einschließen.

7. Reinigungsprodukt nach einem der vorhergehenden Ansprüche, wobei das Dispergiermittel eine oder mehrere organische Schwefelverbindungen einschließt, wobei die eine oder mehrere organische Schwefelverbindungen gegebenenfalls eine Sulfonsäure oder eine polymere Sulfonsäure einschließen.

8. Reinigungsprodukt nach einem der vorhergehenden Ansprüche, wobei das amphotere Tensid ein schwach schäumendes amphoteres Tensid ist und/oder das amphotere Tensid eine oder mehrere Aminosäuren einschließt, wobei die eine oder mehrere Aminosäuren gegebenenfalls eine Alpha-Aminosäure oder Alanin einschließen.

9. Reinigungsprodukt nach einem der vorhergehenden Ansprüche, wobei die Creme oder das Gel mindestens 40 Gew.-% Komplexbildner, 5 Gew.-% bis 15 Gew.-% Dispergiermittel, 5 Gew.-% bis 15 Gew.-% amphoteres Tensid, weniger als 20 Gew.-% Wasser und 2 Gew.-% bis 10 Gew.-% Korrosionsinhibitor umfasst.

10. Reinigungsproduktsatz zur Verwendung in einem zentralen Heiz- oder Kühlsystem, wobei der Satz eine erste Reinigungsproduktkomponente in einem ersten Behälter und eine zweite Reinigungsproduktkomponente in einem zweiten Behälter umfasst, wobei die ersten und zweiten Reinigungsproduktkomponenten zusammen mindestens 20 Gew.-% Komplexbildner, mindestens 5 Gew.-% Dispergiermittel und mindestens 5 % amphoteres Tensid umfassen, wobei die ersten und zweiten Reinigungsproduktkomponenten jeweils unabhängig voneinander weniger als 20 Gew.-% Wasser umfassen.

11. Reinigungsproduktsatz nach Anspruch 10, wobei eine oder beide der ersten und zweiten Reinigungsproduktkomponenten Korrosionsinhibitor umfassen.

12. Verfahren zur Herstellung einer Creme oder eines Gels, das ein Reinigungsprodukt für ein zentrales Heiz- oder Kühlsystem ist, wobei das Verfahren die Schritte des Mischens von Inhaltsstoffen umfasst, einschließlich eines Komplexbildners, eines Dispergiermittels, eines amphoteren Tensids und einer Menge Wasser, und aus dem Gemisch, das eine Creme oder ein Gel bildet, umfassend mindestens 20 Gew.-% Komplexbildner, mindestens 5 Gew.-% Dispergiermittel, mindestens 5 Gew.-% amphoteres Tensid und weniger als 20 Gew.-% Wasser.

13. Verfahren nach Anspruch 12, das ferner den Schritt des Einkapselns der Creme oder des Gels in einen wasserlöslichen Film umfasst, wobei gegebenenfalls
eine erste Gruppe der Reinigungsproduktbestandteile mit einer ersten Menge des Wassers vermischt wird, um eine erste Reinigungsproduktkomponente zu bilden, und
eine zweite Gruppe der Reinigungsproduktbestandteile mit einer zweiten Menge des Wassers vermischt wird, um eine zweite Reinigungsproduktkomponente zu bilden, und
die erste und zweite Reinigungsproduktkomponente in dem wasserlöslichen Film in dem jeweiligen ersten und zweiten Kompartiment eingekapselt sind.

14. Verfahren nach Anspruch 12 oder Anspruch 13, einschließlich des Mischens von Korrosionsinhibitor in die Mischung, wobei die Creme oder das Gel mindestens 40 Gew.-% Komplexbildner, 5 Gew.-% bis 15 Gew.-% Dispergiermittel, 5 Gew.-% bis 15 Gew.-% amphoteres Tensid, weniger als 20 Gew.-% Wasser und 2 Gew.-% bis 10 Gew.-% Korrosionsinhibitor umfasst.

15. Verfahren zur Reinigung eines zentralen Heiz- oder Kühlsystems, das Verfahren umfassend das Einbringen eines Reinigungsprodukts nach einem der Ansprüche 1 bis 9 oder eines Satzes nach Anspruch 10 oder 11 in eine Flüssigkeit des zentralen Heiz- oder Kühlsystems, wobei gegebenenfalls nach Ablauf einer Zeitspanne, in der das Reinigungsprodukt oder der Satz zirkulieren und wirken kann, das Reinigungsprodukt oder der Satz aus dem zentralen Heiz- oder Kühlsystem gespült wird.

## Revendications

1. Produit de nettoyage destiné à être utilisé dans un système de chauffage ou de refroidissement central, le produit de nettoyage comprenant
au moins 20 % en poids d'agent complexant,
au moins 5 % en poids d'agent dispersant,
au moins 5 % en poids de tensioactif amphotère, et
moins de 20 % en poids d'eau,
dans lequel le produit de nettoyage se présente sous la forme d'une crème ou d'un gel.

2. Produit de nettoyage selon la revendication 1, comprenant un inhibiteur de corrosion, facultativement dans lequel l'inhibiteur de corrosion inclut un ou plusieurs des éléments suivants : une amine, un azole, une triéthanolamine et/ou un benzotriazole.

3. Produit de nettoyage selon la revendication 1 ou la revendication 2, dans lequel la crème ou le gel est encapsulé(e) dans un film soluble dans l'eau ou fourni(e) dans un récipient, facultativement dans lequel un premier groupe d'ingrédients de produit de nettoyage est fourni dans un premier compartiment du film soluble dans l'eau ou du récipient, et un second groupe d'ingrédients de produit de nettoyage est fourni dans un second compartiment du film soluble dans l'eau ou du récipient, et chaque groupe d'ingrédients comprend moins de 20 % en poids d'eau.

4. Produit de nettoyage selon l'une quelconque des revendications précédentes, dans lequel au moins l'un de l'agent complexant, de l'agent dispersant et du tensioactif amphotère est (contenu) en suspension dans la crème ou le gel.

5. Produit de nettoyage selon l'une quelconque des revendications précédentes, comprenant un, deux ou trois des éléments suivants ou les quatre éléments suivants :
60 % en poids à 85 % en poids d'agent complexant ; jusqu'à 15 % en poids d'agent dispersant ;
jusqu'à 15 % en poids de tensioactif amphotère ; et lorsqu'il dépend de la revendication 2, jusqu'à 10 % en poids d'inhibiteur de corrosion ;
dans lequel la somme de % en poids pour l'agent complexant, l'agent dispersant, le tensioactif amphotère et l'eau, et le cas échéant l'inhibiteur de corrosion, ne dépasse pas 100 %.

6. Produit de nettoyage selon l'une quelconque des revendications précédentes, dans lequel l'agent complexant inclut un ou plusieurs composés organophosphorés, facultativement dans lequel les un ou plusieurs composés organophosphorés incluent un phosphonate ou un phosphonate de sodium.

7. Produit de nettoyage selon l'une quelconque des revendications précédentes, dans lequel l'agent dispersant inclut un ou plusieurs composés organosulfurés, dans lequel les un ou plusieurs composés organosulfurés incluent facultativement un acide sulfonique ou un acide sulfonique polymérique.

8. Produit de nettoyage selon l'une quelconque des revendications précédentes, dans lequel le tensioactif amphotère est un tensioactif amphotère peu (faiblement) moussant et/ou le tensioactif amphotère inclut un ou plusieurs acides aminés, dans lequel les un ou plusieurs acides aminés incluent facultativement un acide alpha aminé ou une alanine.

9. Produit de nettoyage selon l'une quelconque des revendications précédentes, dans lequel la crème ou le gel comprend au moins 40 % en poids d'agent complexant, 5 % en poids à 15 % en poids d'agent dispersant, 5 % en poids à 15 % en poids de tensioactif amphotère, moins de 20 % en poids d'eau et 2 % en poids à 10 % en poids d'inhibiteur de corrosion.

10. Kit de produit de nettoyage destiné à être utilisé dans un système de chauffage ou de refroidissement central, le kit comprenant un premier composant de produit de nettoyage dans un premier récipient et un second composant de produit de nettoyage dans un second récipient, dans lequel les premier et second composants de produit de nettoyage comprennent ensemble au moins 20 % en poids d'agent complexant, au moins 5 % en poids d'agent dispersant et au moins 5 % de tensioactif amphotère, dans lequel les premier et second composants de produit de nettoyage comprennent chacun indépendamment moins de 20 % en poids d'eau.

11. Kit de produit de nettoyage selon la revendication 10, dans lequel les premier et/ou second composants de produit de nettoyage comprennent un inhibiteur de corrosion.

12. Procédé de fabrication d'une crème ou d'un gel qui est un produit de nettoyage pour un système de chauffage ou de refroidissement central, le procédé comprenant les étapes de mélange d'ingrédients incluant un agent complexant, un agent dispersant, un tensioactif amphotère et une quantité d'eau, et à partir du mélange formant une crème ou un gel comprenant au moins 20 % en poids d'agent complexant, au moins 5 % en poids d'agent dispersant, au moins 5 % en poids de tensioactif amphotère et moins de 20 % en poids d'eau.

13. Procédé selon la revendication 12, comprenant en outre une étape d'encapsulation de la crème ou du gel dans un film soluble dans l'eau, facultativement dans lequel
un premier groupe des ingrédients de produit de nettoyage est mélangé dans une première quantité d'eau pour former un premier composant de produit de nettoyage, et
un second groupe des ingrédients de produit de nettoyage est mélangé dans une seconde quantité d'eau pour former un second composant de produit de nettoyage, et
les premier et second composants de produit de nettoyage sont encapsulés dans le film soluble dans l'eau dans les premier et second compartiments respectifs.

14. Procédé selon la revendication 12 ou la revendication 13, incluant le mélange d'un inhibiteur de corrosion dans le mélange, dans lequel la crème ou le gel comprend au moins 40 % en poids d'agent complexant, 5 % en poids à 15 % en poids d'agent dispersant, 5 % en poids à 15 % en poids de tensioactif amphotère, moins de 20 % en poids d'eau et 2 % en poids à 10 % en poids d'inhibiteur de corrosion.

15. Procédé de nettoyage d'un système de chauffage ou de refroidissement central, le procédé comprenant une introduction d'un produit de nettoyage selon l'une quelconque des revendications 1 à 9 ou d'un kit de produit de nettoyage selon la revendication 10 ou 11 dans un fluide du système de chauffage ou de refroidissement central, dans lequel, facultativement, après l'écoulement d'une période de temps pour que le produit de nettoyage ou le kit de produit de nettoyage circule et fasse effet, le produit de nettoyage ou le kit de produit de nettoyage est rincé hors du système de chauffage ou de refroidissement central.
